# EUROPÄISCHE PATENTANMELDUNG

(11) **EP 2 353 387 A1**
(43) Veröffentlichungstag der Anmeldung: **10.08.2011**
(21) Anmeldenummer: 10152790.1
(22) Anmeldetag: 05.02.2010
(51) Int. Cl.: A01N 43/40, A01N 43/56, A01N 45/02, A01N 61/00, A01P 21/00, A01N 43/653, A01N 43/30, A01N 43/88

(54) **Verwendung von Succinat-Dehydrogenase (SDH)-Inhibitoren in der Behandlung von Pflanzenarten der Familie der Süßgräser**

(71) Anmelder: Bayer CropScience AG, 40789 Monheim (DE)
(72) Erfinder: Die Erfindernennung liegt noch nicht vor

(57) **Zusammenfassung**

Beschrieben wird die Verwendung von von mindestens einem Succinat-Dehydrogenase (SDH) Inhibitor zur Vergrößerung der Biomasse des Fahnenblatts, des Blatts F-1 und/oder des Blatts F-2 der Pflanze von Pflanzenarten der Familie der Süßgräser (*Poaceae*)*.*

## Beschreibung

Die vorliegende Erfindung betrifft die spezifische Verwendung von Succinat-Dehydrogenase (SDH)-Inhibitoren in der Behandlung von Pflanzenarten der Familie der Süßgräser *(Poaceae).*

Die vorliegende Erfindung betrifft insbesondere die spezifische Verwendung von Succinat-Dehydrogenase (SDH)-Inhibitoren in der Behandlung von Pflanzenarten der Familie der Süßgräser (*Poaceae*) zur Vergrößerung der Biomasse des Fahnenblatts, des Blatts F-1 und/oder des Blatts F-2 der Pflanzen.

Die Verwendung von Succinat-Dehydrogenase (SDH)-Inhibitoren zur Bekämpfung von phytopathogenen Pilzen und Mikroorganismen ist aus dem Stand der Technik bekannt:
So beschreibt beispielsweise die WO 03/070705 A1 die Verwendung des Succinat-Dehydrogenase (SDH)-Inhibitors N-(3',4'-Dichlor-5-fluor-1,1'-biphenyl-2-yl)-3-(difluormethyl)-1-methyl-1H-pyrazol-4-carboxamid (im Folgenden mit dem *common name* Bixafen bezeichnet) zur Bekämpfung von unerwünschten Mikroorganismen und phytopathogenen Pilzen.

Aus der WO 2009/106633 A1 ist bekannt, dass phytopathogene Pilze und Mikroorganismen wirkungsvoll mit Mischungen aus Bixafen und Epoxiconazole oder Metconazole behandeln werden können. Diese Mischungen werden gemäß der Lehre der WO 2009/106633 A1 unmittelbar auf dem Saatgut oder dem Pflanzenboden appliziert.

Die WO 2006/131221 A1 lehrt die Verwendung von Bixafen zur Bekämpfung von pathogenen Pilzen, insbesondere von Sojabohnenrost; Phakopsora-Arten, wie beispielsweise Phakopsora sojae, Phakopsora pachyrhizi und Phakopsora vignae; Uredo sojae und Uromyces sojae; aber auch gegen weitere Rostarten, wie beispielsweise den Kaffeerost Helileia vastarix.

Diesen Druckschriften ist kein Hinweis auf einen Effekt von Succinat-Dehydrogenase (SDH)-Inhibitoren hinsichtlich der Erhöhung des Ernteertrages zu entnehmen.

Die WO 01/64928 A2 beschreibt ein Verfahren zur Erhöhung der Biomasse von monokotyledonen Pflanzen, z.B. Reis, Weizen, Gerste, Hafer oder Hirse, und dikotyledonen Pflanzen, z.B. Erbsen, Alfalfa, Kichererbsen, Chicorée, Grünkohl oder Linsen, und zur Erhöhung des Ertrages dieser Pflanzen hinsichtlich der Samenproduktion und Pflanzenbiomasse. Beim Weizen wurde der Ernteindex (Harvest Index) zur Beschreibung des Effektes herangezogen. Die funktionale Aktivität der Pflanzen wurde anhand der Erhöhung der totalen Kornanzahl, der Erhöhung des individuellen Korngewichtes, der Erhöhung des totalen Korngewichtes pro Pflanze und der oberirdischen Biomasse, der Erhöhung des Ernteindizes (Harvest Index) und der Verbesserung der Hitzestabilität beschrieben. Das Verfahren zur Erhöhung der Pflanzenbiomasse in der WO 01/64928 A2 basiert auf einer transgenen Manipulation der Pflanzen und nicht - wie vorliegend später ausgeführt - auf der Verwendung von spezifischen aktiven Wirkstoffen. In der WO 01/64928 A2 sind ebenfalls keine Hinweise auf eine kombinierte Behandlung von transgenen Pflanzen und einer fungizid aktiven Komponente enthalten.

Ähnliche Verfahren, umfassend eine gentechnische Methode zur Herstellung transgener Pflanzen zwecks Erhöhung der Biomasse, sind aus WO 2003/096797 A2, WO 2006/013010 A2 oder WO 2008/142163 A2 bekannt.

Es wurde nun gefunden, dass es besonders vorteilhaft ist, Succinat-Dehydrogenase (SDH)-Inhibitoren zur Erhöhung des Ernteertrags auf Pflanzenarten der Familie der Süßgräser *(Poaceae)* anzuwenden. Insbesondere erwies sich die Anwendung von Succinat-Dehydrogenase (SDH)-Inhibitoren bei Applikation in den Entwicklungsstadien BBCH 12 bis 70, bevorzugt in den Entwicklungsstadien BBCH 20 bis 65, weiter bevorzugt in den Entwicklungsstadien BBCH 29 bis 60, besonders bevorzugt in den Entwicklungsstadien BBCH 33 bis 55, der Pflanzenart als wirksam. Neben der Erhöhung des Ernteertrages erwiesen sich die Succinat-Dehydrogenase (SDH)-Inhibitoren gleichzeitig insbesondere wirksam in der Verbesserung des physiologischen Zustandes der Pflanzen der Familie der Süßgräser *(Poaceae)* und in der Bekämpfung von speziellen Phytopathogenen, insbesondere von *Puccinia triticina, Blumeria graminis* und *Septoria tritici.*

Im Sinne der vorliegenden Erfindung wird unter einer zu behandelnden Pflanze insbesondere eine Pflanze ab dem Entwicklungsstadium BBCH 12, bevorzugt ab dem Entwicklungsstadium BBCH 20, weiter bevorzugt ab dem Entwicklungsstadium BBCH 29, noch weiter bevorzugt ab dem Entwicklungsstadium BBCH 33, verstanden. Die Definitionen der BBCH-Stadien sind der BBCH-Monografie der Biologischen Bundesanstalt für Land und Forstwirtschaft, 2. Auflage, 2001 entnommen.

Damit stellt die vorliegende Erfindung ein Verfahren zur Erhöhung des Ernteertrages von Pflanzen der Familie der Süßgräser *(Poaceae)* bereit. Die im Allgemeinen gleichzeitig erreichte Verbesserung des physiologischen Zustands der Pflanze bezieht sich im Allgemeinen auf eine erhöhte physiologische Aktivität der Pflanze, welche sich beispielsweise durch eine längere Grünfärbungsdauer der Pflanze äußert. Eine Auswirkungen der erfindungsgemäßen Verwendung auf die Physiologie der Pflanze werden weiter unten näher beschrieben.

Die vorliegende Erfindung betrifft in einem ersten Aspekt die Verwendung von mindestens einem Succinat-Dehydrogenase (SDH)-Inhibitor auf Pflanzenarten der Familie der Süßgräser (*Poaceae*) zur Erhöhung des Ernteertrages duch die Vergrößerung der Biomasse des Fahnenblatts, des Blatts F-1 und/oder des Blatts F-2 der Pflanze.

Die durch die Applikation von Succinat-Dehydrogenase (SDH)-Inhibitoren erreichte Ertragssteigerung ist dabei vorzugsweise nicht auf die bereits bekannte fungizide Wirkung der Succinat-Dehydrogenase (SDH)-Inhibitoren gegenüber Phytopathogenen zurückzuführen; insbesondere kann mit dem erfindungsgemäßen Konzept eine Ertragssteigerung auch in Abwesenheit von Phytopathogenen erreicht werden.

Im Rahmen der vorliegenden Erfindung hat sich - wie bereits erwähnt - herausgestellt, dass der mindestens eine Succinat-Dehydrogenase (SDH)-Inhibitor vorzugsweise zu einem Zeitpunkt appliziert wird, welcher einer der Entwicklungsstadien BBCH 12 bis 70, bevorzugt einer der Entwicklungsstadien BBCH 20 bis 65, weiter bevorzugt einer der Entwicklungsstadien BBCH 29 bis 60, besonders bevorzugt einer der Entwicklungsstadien BBCH 33 bis 55, entspricht. Wenn eine Applikation des Succinat-Dehydrogenase (SDH)-Inhibitors zu diesem Zeitpunkt der Entwicklung der Pflanze erfolgt, ist die Ertragssteigerung besonders ausgeprägt.

Darüber hinaus ist es des Weiteren bevorzugt, wenn der mindestens eine Succinat-Dehydrogenase (SDH)-Inhibitor mindestens ein weiteres Mal auf die zu behandelnden Pflanze appliziert wird. Diese zweite Behandlung erfolgt vorzugsweise zu einem Zeitpunkt, zu welchem an der zu behandelnden Pflanze zumindest das Blatt F-2, weiter bevorzugt zumindest das Blatt F-2 und das Blatt F-1, noch weiter bevorzugt das Fahnenblatt, das Blatt F-1 und das Blatt F-2, entwickelt sind. In diesem Fall erfolgt die Applikation des Succinat-Dehydrogenase (SDH)-Inhibitors insbesondere mittels Sprühapplikation auf die vorgenannten Blätter, also dem Fahnenblatt, dem Blatt F-1 und/oder dem Blatt F-2. Insgesamt wird somit ein größeres Wachstum dieser Blätter erreicht. Entsprechende Wachstumssteigerungen lassen sich jedoch nicht nur mit dieser zweistufigen Applikation der Succinat-Dehydrogenase (SDH)-Inhibitoren erreichen, sondern auch wenn nur eine erste Applikation in den zuvor genannten Entwicklungsstadien erfolgt.

Durch die vorliegende Erfindung ist es somit insbesondere möglich, die Größe bzw. Fläche des Fahnenblatts, des Blatts F-1 und/oder des Blatts F-2 zu verbessern. Dies lässt sich anhand der Länge und der Breite der jeweiligen Blätter feststellen.

In einem weiteren Aspekt der vorliegenden Erfindung betrifft die vorliegende Erfindung daher die Verwendung von mindestens einem Succinat-Dehydrogenase (SDH)-Inhibitor auf Pflanzenarten der Familie der Süßgräser *(Poaceae)* zur Steigerung der Größe bzw. Fläche mindestens eines Pflanzenblattes, ausgewählt aus der Gruppe, bestehend aus dem Fahnenblatt, dem Blatt F-1 und dem Blatt F-2.

Da sich bei der erfindungsgemäßen Verwendung von mindestens eines Succinat-Dehydrogenase (SDH)-Inhibitors die Größe bzw. Fläche der zuvor genannten Blätter erhöht, kommt es im Rahmen der vorliegenden Erfindung im Allgemeinen auch zu einer Vergrößerung der Biomasse der Pflanze. In einem weiteren Aspekt betrifft die vorliegende Erfindung daher die Verwendung von mindestens einem Succinat-Dehydrogenase (SDH)-Inhibitor zur Vergrößerung der Biomasse von Pflanzen.

Insbesondere ist es durch die erfindungsgemäße Verwendung von mindestens einem Succinat-Dehydrogenase (SDH)-Inhibitor möglich, die Biomasse von Ähren, Getreidekörner oder Ähren und Getreidekörner oder Getreidekörner je Ähre der behandelten Pflanze zu verbessern.

Darüber hinaus wurde gemäß einem weiteren Aspekt herausgefunden, dass durch die spezielle erfindungsgemäße Applikation von mindestens einem Succinat-Dehydrogenase (SDH)-Inhibitor nicht nur die Biomasse bzw. der Ernteertrag der behandelten Pflanze erhöht werden kann, sondern auch der physiologische Zustand der Pflanze insgesamt verbessert werden kann.

Eine verbesserte Physiologie der Pflanze äußert sich beispielsweise in einer längeren Dauer der grünen Blattfärbung der Pflanze. So wurde im Rahmen der vorliegenden Erfindung herausgefunden, dass durch die spezielle erfindungsgemäße Applikation von dem mindestens einen Succinat-Dehydrogenase (SDH)-Inhibitor die grüne Blattflächendauer verlängert werden kann. Hierdurch tritt eine verspätete Abreifung (Seneszenz) der Pflanze auf, was für den Landwirt einen Vorteil aufgrund größerer Flexibilität des Zeitpunkts der Ernte bedeutet. Gleichzeitig tritt eine Gelbfärbung entsprechender Pflanzen ebenfalls verspätet auf.

Daher betrifft die vorliegende Erfindung auch die Verwendung von mindestens einem Succinat-Dehydrogenase (SDH)-Inhibitor zur Applikation auf Pflanzenarten der Familie der Süßgräser (*Poaceae*)*,* um die grüne Blattflächendauer zu verlängern.

Ferner betrifft die vorliegende Erfindung auch die Verwendung mindestens eines Succinat-Dehydrogenase (SDH)-Inhibitors zur Applikation auf Pflanzenarten der Familie der Süßgräser *(Poaceae),* um eine verspätete Abreifung (Seneszenz) der Pflanze zu erreichen.

Insbesondere kann mit Hilfe der Applikation des erfindungsgemäß vorgesehenen Succinat-Dehydrogenase (SDH)-Inhibitors die Entwicklung der Ähren von Getreidepflanzen verzögert bzw. vereinheitlicht (was durch einen späteren Zeitpunkt des Ährenschiebens und einem früheren Ende des Ährenschiebens gekennzeichnet ist) werden. So zeigen die durchgeführten Untersuchungen, dass aufgrund der erfindungsgemäßen Applikation von Succinat-Dehydrogenase (SDH)-Inhibitoren das Auftreten von Ähren um bis zu eine Woche verzögert werden kann. Der Vorteil des verzögerten Ährenschiebens, dass im Allgemeinen im BBCH-Makrostadium 5 stattfindet und im BBCH-Entwicklungsstadium 51 beginnt, ist, dass durch diese Verzögerung eine erhöhte Biomasse erzielt wird.

Der Vorteil eines einheitlicheren Ährenschieben ist, dass bei den erfindungsgemäß im Fokus stehenden Pflanzen es häufig während dem Zeitraum des Ährenschiebens zu Befall mit Fusarium-Pathogenen kommt und eine einheitlicheres Ährenschieben, d.h. ein kürzerer Zeitraum des Ährenschiebens an sich, eine gezielte Kontrolle des Fusarium-Pathogens während diesem Zeitraum ermöglicht.

Im Rahmen der vorliegenden Erfindung wurde ferner herausgefunden, dass durch die spezielle erfindungsgemäße Applikation von mindestens einem Succinat-Dehydrogenase (SDH)-Inhibitor ein erhöhter Chlorophyllgehalt in der Pflanze erzeugt wird. Ferner wurde herausgefunden, dass durch die Applikation von mindestens einem Succinat-Dehydrogenase (SDH)-Inhibitor ein stabilisierter Chlorophyllgehalt in der Pflanze erreicht wird. Unter einem stabilisierten Chlorophyllgehalt wird im Rahmen der vorliegenden Erfindung verstanden, wenn der Abbau des Chlorophylls in der Pflanze aufgrund der erfindungsgemäßen Applikation langsamer als in einer unbehandelten Pflanze erfolgt.

Daher betrifft die vorliegende Erfindung auch die Verwendung von mindestens einem Succinat-Dehydrogenase (SDH)-Inhibitor zur Applikation auf Pflanzenarten der Familie der Süßgräser (*Poaceae*)*,* um einen erhöhten Chlorophyllgehalt und/oder einen stabilisierten Chlorophyllgehalt in der Pflanze zu erreichen.

Des Weiteren wurde festgestellt, dass aufgrund der erfindungsgemäßen Applikation in den Pflanzen eine erhöhte Photosyntheserate auftreten kann. Daher betrifft die vorliegende Erfindung auch die Verwendung von mindestens einem Succinat-Dehydrogenase (SDH)-Inhibitor zur Applikation auf Pflanzenarten der Familie der Süßgräser (*Poaceae*)*,* um eine erhöhte Photosyntheserate in der Pflanze zu erreichen.

Diese erhöhte Photosyntheserate der Pflanze kann mit einer verspäteten Seneszenz der Pflanze einhergehen.

Im Rahmen der vorliegenden Erfindung wurde ferner herausgefunden, dass durch die spezielle erfindungsgemäße Applikation von mindestens einem Succinat-Dehydrogenase (SDH)-Inhibitor schließlich die Widerstandsfähigkeit bzw. Toleranz von Pflanzen gegenüber abiotischen Stressfaktoren verbessert werden kann. So zeigt sich bei Hitzestress, dass mit mindestens einem Succinat-Dehydrogenase (SDH)-Inhibitor behandelte Pflanzen eine verbesserte Transpirationsrate und damit eine verbesserte Verdunstungskühlung aufweisen.

Unter der Bezeichnung Toleranz bzw. Widerstandsfähigkeit gegenüber abiotischem Stress werden im Rahmen der vorliegenden Erfindung verschiedenartige Vorteile für Pflanzen verstanden, die nicht unmittelbar mit der bekannten fungiziden Wirksamkeit von Succinat-Dehydrogenase (SDH)-Inhibitoren verbunden sind. Solche vorteilhaften Eigenschaften äußern sich beispielsweise in der nachfolgend genannten verbesserten Pflanzencharakteristika: verbesserte Wurzelwachstum hinsichtlich Oberfläche und Tiefe, vermehrte Ausläuferbildung oder Bestockung, stärkere und produktivere Ausläufer und Bestockungstriebe, Verbesserung des Sprosswachstums, erhöhte Standfestigkeit, vergrößerte Sprossbasisdurchmesser, vergrößerte Blattfläche, höhere Erträge an Nähr- und Inhaltsstoffen, wie z.B. Kohlenhydrate, Fette, Öle, Proteine, Vitamine, Mineralstoffe, ätherische Öle, Farbstoffe, Fasern, bessere Faserqualität, früheres Blühen, gesteigerte Blütenanzahl, reduzierter Gehalt an toxischen Produkten wie Mycotoxine, reduzierter Gehalt an Rückständen oder unvorteilhaften Bestandteilen jeglicher Art oder bessere Verdaulichkeit, verbesserte Lagerstabilität des Erntegutes, verbesserter Toleranz gegenüber unvorteilhaften Temperaturen, verbesserter Toleranz gegenüber Dürre und Trockenheit, wie auch Sauerstoffmangel durch Wasserüberschuss, verbesserte Toleranz gegenüber erhöhten Salzgehalten in Böden und Wasser, gesteigerte Toleranz gegenüber Ozonstress, verbesserte Verträglichkeit gegenüber Herbiziden und anderen Pflanzenbehandlungsmitteln, verbesserte Wasseraufnahme und Photosyntheseleistung, vorteilhafte Pflanzeneigenschaften, wie beispielsweise Veränderung der Reifung, gleichmäßigere Abreife, größere Anziehungskraft für Nützlinge, verbesserte Bestäubung oder andere Vorteile, die einem Fachmann durchaus bekannt sind.

Die zuvor beschrieben Wirkungen der Succinat-Dehydrogenase (SDH)-Inhibitoren können dabei einzeln oder auch gleichzeitig auftreten und lassen sich üblicherweise mit allgemein gültigen Begriffen belegen. Solche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness, ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", Plant Health Properties", Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind.

Darüber hinaus werden mit der erfindungsgemäß vorgesehenen Applikation von Succinat-Dehydrogenase (SDH)-Inhibitoren gleichzeitig relevante Pathogene erfolgreich bekämpft. Hierbei handelt es sich um die bereits bekannte Applikation von Bixafen zur Kontrolle von Fungiziden, wobei jedoch durch die spezielle Applikation von Bixafen auf dem Fahnenblatt, den Blätter F-1 und/oder F-2 eine besonders wirkungsvolle Kontrolle der Pathogene möglich ist.

Zu kontrollierende Pathogen können im Rahmen der vorliegenden Erfindung ausgewählt sein aus der Gruppe, bestehend aus Ascochyta tritici, Blumeria graminis, Cladosporium herbarum, Cochliobolus sativus, Epicoccum spp., Erysiphe graminis, Fusarium graminearum, Fusarium culmorum, Gaeumannomyces graminis, Leptosphaeria nodorum, Microdochium nivale, Pseudocercospora herpotrichoides, Pseudocercosporella herpotrichoides, Puccinia striiformis, Puccinia triticina, Puccinia hordei, Puccinia recondite, Pyrenophora graminea, Pyrenophora teres, Pyrenophora tritici repentis, Ramularia collo-cygni, Rhizoctonia solani, Rhizoctonia cerealis, Rhynchosporium secalis, Septoria nodorum, Septoria tritici, Stagonospora nodorum, Tilletia caries, Typhula incarnate, Uromyces appendiculatus, Ustilago avenae und Ustilago nuda.

Insbesondere eignet sich die vorliegende Erfindung zur gleichzeitigen Kontrolle von Pathogenen, ausgewählt aus der Gruppe, bestehend aus Puccinia triticina, Blumeria graminis und Septoria tritici.

Die erfindungsgemäßen Succinat-Dehydrogenase (SDH)-Inhibitoren können aus den folgenden Verbindungen ausgewählt werden:
(1) Fluopyram mit der chemischen Bezeichnung N-{[3-chloro-5-(trifluoromethyl)-2-pyridinyl]ethyl}-2,6-dichlorobenzamid, das ein Fungizid der chemischen Klasse der Pyridylethylbenzamide ist. Fluopyram und dessen Herstellungsprozess ausgehend von bekannten und kommerziell erhältlichen Komponenten sind in der Druckschrift EP 1 389 614 A beschrieben.
(2) Penflufen mit der chemischen Bezeichnung N-[2-(1,3-Dimethylbutyl)phenyl]-5-fluoro-1,3-dimethyl-1H-pyrazole-4-carboxamid. Penflufen und dessen Herstellungsprozess ausgehend von bekannten und kommerziell erhältlichen Komponenten sind in der Druckschrift WO 2003/010149 A beschrieben.
(3) Bixafen mit der chemischen Bezeichnung N-(3',4'-Dichloro-5-fluoro-1,1'-biphenyl-2-yl)-3-(difluoromethyl)-1-methyl-1H-pyrazole-4-carboxamid. Bixafen und dessen Herstellungsprozess ausgehend von bekannten und kommerziell erhältlichen Komponenten sind in der Druckschrift WO 2003/070705 A beschrieben.
(4) Sedaxane, bei welchem es sich um eine Mischung aus zwei cis-Isomeren 2'-[(1RS,2RS)-1,1'-Bicycloprop-2-yl]-3-(difluoromethyl)-1-methylpyrazol-4-carboxanilid und zwei trans-Isomeren 2'-[(1RS,2SR)-1,1'-Bicycloprop-2-yl]-3-(difluoromethyl)-1-methylpyrazol-4-carboxanilid handelt. Sedaxane und dessen Herstellungsprozess ausgehend von bekannten und kommerziell erhältlichen Komponenten sind in den Druckschriften WO 2003/074491 A, WO 2006/015865 A und WO 2006/015866 A beschrieben.
(5) Isopyrazam, bei welchem es sich um eine Mischung aus 2 syn-Isomeren 3-(Difluoromethyl)-1-methyl-N-[(1RS,4SR,9RS)-1,2,3,4-tetrahydro-9-isopropyl-1,4-methanonaphthalen-5-yl]pyrazol-4-carboxamid und 2 anti-Isomeren 3-(Difluoromethyl)-1-methyl-N-[(1RS,4SR,9SR)-1,2,3,4-tetrahydro-9-isopropyl-1,4-methanonaphthalen-5-yl]pyrazol-4-carboxamid handelt. Isopyrazam und dessen Herstellungsprozess ausgehend von bekannten und kommerziell erhältlichen Komponenten sind in der Druckschrift WO 2004/035589 A beschrieben.
(6) Penthiopyrad mit der chemischen Bezeichnung (RS)-N-[2-(1,3-Dimethylbutyl)-3-thienyl]-1- methyl-3-(trifluoromethyl)pyrazol-4-carboxamid. Penthiopyrad und dessen Herstellungsprozess ausgehend von bekannten und kommerziell erhältlichen Komponenten sind in der Druckschrift EP 0 737 682 A beschrieben.
(7) Boscalid mit der chemischen Bezeichnung 2-Chlor-N-(4'-chlorobiphenyl-2-yl)nicotinamid. Boscalid und dessen Herstellungsprozess ausgehend von bekannten und kommerziell erhältlichen Komponenten sind in der Druckschrift DE 195 31 813 A beschrieben.
(8) Fluxapyraxad mit der chemischen Bezeichnung 3-(Difluoromethyl)-1-methyl-N-(3',4',5'-trifluorobiphenyl-2-yl)-1H-pyrazol-4-carboxamid. Fluxapyraxad und dessen Herstellungsprozess ausgehend von bekannten und kommerziell erhältlichen Komponenten ist in der Druckschrift WO 2006/087343 A beschrieben.
(9) N-[1-(2,4-Dichlorphenyl)-1-methoxypropan-2-yl]-3-(difluormethyl)-1-methyl-1H-pyrazol-4-carboxamid dessen Herstellungsprozess ausgehend von bekannten und kommerziell erhältlichen Komponenten ist in der Druckschrift WO 2010/000612 A beschrieben.

Im Rahmen der vorliegenden Erfindung ist es besonders bevorzugt, wenn als Succinat-Dehydrogenase (SDH)-Inhibitor Bixafen mit der chemischen Bezeichnung N-(3',4'-dichloro-5-fluoro-1,1'-biphenyl-2-yl)-3-(difluoromethyl)-1-methyl-1H-pyrazole-4-carboxamid verwendet wird.

Des Weiteren ist es bevorzugt, wenn Bixafen in Kombination mit mindestens einem weiteren Wirkstoff verwendet wird. Der weitere Wirkstoff wird vorzugsweise ausgewählt aus der Gruppe, bestehend aus Spiroxamin, Fluoxastrobin und Prothioconazol. Besonders bevorzugt ist eine Kombination von Bixafen und Prothioconazole.

Die erfindungsgemäß vorgesehene Verwendung von Succinat-Dehydrogenase (SDH)-Inhibitoren erfolgt vorzugsweise mit einer Dosierung zwischen 0,01 und 3 kg/ha, besonders bevorzugt zwischen 0,01 und 1,5 kg/ha, insbesondere bevorzugt zwischen 0,1 und 0,5 kg/ha.

Als besonders geeignete Zielkulturen im Rahmen der vorliegenden Erfindung sind aus der Familie der der Süßgräser zu nennen: Weizen, Roggen, Gerste, Hafer, Hirse, Mais, Reis, Triticale, Bambus und Zuckerrohr.

Ferner eignet sich die vorliegende Erfindung für die Behandlung von Wintergetreide und Sommergetreide.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder mit Hilfe rekombinanter DNA-Techniken, gezüchtet worden sind. Kulturpflanzen können demnach Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Im Rahmen der vorliegenden Erfindung können auch genetisch modifizierten Organismen (GMOs) behandelt werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Hypochondriengenom der transformierten Pflanze dadurch neue oder verbesserte agronomische oder sonstige Eigenschaften verleiht, dass es ein interessierendes Protein oder Polypeptid exprimiert oder dass es ein anderes Gen, das in der Pflanze vorliegt bzw. andere Gene, die in der Pflanze vorliegen, herunter reguliert oder abschaltet (zum Beispiel mittels Antisense-Technologie, Cosuppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls erfindungsgemäß behandelt werden können, sind solche Pflanzen, die gegen einen oder mehrere abiotische Streßfaktoren resistent sind. Zu den abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und veränderter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die erfindungsgemäß ebenfalls behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Im Rahmen der vorliegenden Erfindung kann der Succinat-Dehydrogenase (SDH)-Inhibitor in der Form einer Formulierung verwendet werden.

Der erfindungsgemäße Wirkstoff kann in seinen handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Der erfindungsgemäß zu verwendende Succinat-Dehydrogenase (SDH)-Inhibitor kann dabei in üblichen Formulierungen verwendet werden, wie Lösungen, Emulsionen, Spritzpulver, wasser- und ölbasierte Suspensionen und Suspensions-Emulsions-Konzentrate.

Im Rahmen der vorliegenden Erfindung ist es insbesondere bevorzugt, wenn der erfindungsgemäß vorgesehene Succinat-Dehydrogenase (SDH)-Inhibitor in der Form einer Sprühformulierung verwendet wird.

Entsprechende Formulierungen und deren Bestandteile sind dem Fachmann an sich bekannt.

Die folgenden Beispiele beschreiben die Erfindung im Einzelnen, beschränken jedoch keineswegs die vorliegende Erfindung.

### Versuchsbeschreibung:

### Beispiel 1:

In Deutschland wurde ein Parzellenversuch mit der Weizensorte Ritmo angelegt, um die Wirkung von Bixafen auf die Physiologie, Morphologie und abiotische Stresstoleranz von Weizenpflanzen unter landwirtschaftlichen Praxisbedingungen zu untersuchen.

Die zu prüfenden Produkte wurden in Form von sequentiellen Spritzfolgen (BBCH 39 und 59) auf die Pflanzen appliziert. Das Spritzvolumen betrug 400 1 Wasser je Hektar. Je Versuchsglied wurden 5 Wiederholungen angelegt.

| **Wirkstoff(e)** | **Formulierung** | **Wirkstoffgehalt [g a.i./l** | **Aufwandmenge [l/ha]** | **Applizierte Menge [g/ha]** |
|---|---|---|---|---|
| **Bixafen** | EC | 125 | 1 | 125 |
| Fluoxastrobin | EC | 100 | 2 | 200 |
| Prothioconazole | EC | 250 | 0,8 | 200 |
| Spiroxamine | EC | 500 | 0,75 | 375 |
| Boscalid | WG | 500 g/kg | 1 kg/ha | 500 g/ha |
| Spiroxamine + Prothioconazole | EC | 300 + 160 | 1,25 | 375 + 200 |
| Bixafen + Prothio-conazole | EC | 75 + 150 | 1,25 | 94+188 |

Anschließend wurden nicht-invasive und invasive Methoden zur Erfassung der Pflanzenentwicklung und -physiologie angewendet. Des Weiteren wurden ertragsrelevante Parameter erfasst.

### Ergebnisse des Beispiels 1:

Die Dauer der Grünfärbung der Blattfläche wurde anhand von regelmäßigen visuellen Bonituren des Anteils der grünen Blattfläche erfasst.

Die Versuche zeigen, dass der Succinat-Dehydrogenase (SDH)-Inhibitor Bixafen einen ausgeprägten Effekt auf die Dauer der grünen Blattfläche der Weizenpflanze aufweist. Der Effekt von Bixafen alleine kann nochmals durch Kombination mit einem Fungizid, insbesondere mit dem Fungizid Prothioconazole, nochmals gesteigert werden.

**Tabelle 1: Einfluss von Fungizidbehandlungen auf die grüne Blattfläche des Fahnenblattes (% Blattfläche)**

| Behandlung | Tage nach der zweiten Fungizid-Applikation | | | | | |
|---|---|---|---|---|---|---|
| | 7 | 14 | 21 | 28 | 35 | 42 |
| Unbehandelt | 97.5 | 92.5 | 74.5 | 63.1 | 0 | 0 |
| Bixafen (BIX) | 98.9 | 98.7 | 98.8 | 96.7 | 73.0 | 26.7 |
| Fluoxastrobin | 98.7 | 98.7 | 98.3 | 95.8 | 63.0 | 23.7 |
| Prothioconazole (PTZ) | 98.8 | 98.2 | 98.1 | 94.0 | 58.8 | 13.8 |
| Spiroxamine (SPR) | 98.3 | 97.9 | 92.7 | 82.3 | 48.6 | 5.5 |
| Boscalid | 96.0 | 95.5 | 86.1 | 73.6 | 43.2 | 7.0 |
| BIX + PTZ | 98.8 | 98.8 | 98.7 | 97.8 | 76.5 | 38.0 |
| SPR + PTZ | 98.9 | 98.6 | 98.6 | 95.6 | 54.6 | 12.6 |

**Tabelle 2: Einfluss von Fungizidbehandlungen auf die grüne Blattfläche des zweitobersten Blattes (F-1; % Blattfläche)**

| Behandlung | Tage nach der zweiten Fungizid-Applikation | | | | | | |
|---|---|---|---|---|---|---|---|
| | 7 | 14 | 21 | 28 | 35 | 42 | 49 |
| Unbehandelt | 94.6 | 87.1 | 57.1 | 41.5 | 0 | 0 | 0 |
| Bixafen (BIX) | 98.4 | 98.3 | 98.5 | 94.8 | 60.0 | 9.2 | 0 |
| Fluoxastrobin | 98.8 | 98.0 | 96.1 | 93.5 | 47.0 | 9.8 | 0 |
| Prothioconazole (PTZ) | 97.8 | 97.8 | 96.8 | 91.2 | 44.3 | 4.2 | 0 |
| Spiroxamine (SPR) | 97.4 | 95.8 | 85.8 | 69.7 | 31.7 | 0 | 0 |
| Boscalid | 94.4 | 91.8 | 74.7 | 60.0 | 25.5 | 0 | 0 |
| BIX + PTZ | 98.6 | 98.5 | 98.4 | 95.8 | 61.0 | 22.7 | 0 |
| SPR + PTZ | 97.6 | 97.4 | 97.3 | 93.4 | 36.3 | 3.7 | 0 |

**Tabelle 3: Einfluss von Fungizidbehandlungen auf die grüne Blattfläche des drittobersten Blattes (F-2; % Blattfläche)**

| Behandlung | Tage nach der zweiten Fungizid-Applikation | | | | | |
|---|---|---|---|---|---|---|
| | 7 | 14 | 21 | 28 | 35 | 42 |
| Unbehandelt | 89.6 | 79.5 | 41.7 | 19.7 | 0 | 0 |
| Bixafen (BIX) | 96.4 | 96.3 | 94.5 | 91.8 | 37.5 | 3.4 |
| Fluoxastrobin | 96.3 | 95.5 | 92.1 | 88.5 | 31.5 | 1.9 |
| Prothioconazole (PTZ) | 96.1 | 95.9 | 94.9 | 83.7 | 25.3 | 0 |
| Spiroxamine (SPR) | 94.1 | 93.3 | 78.1 | 51.7 | 15.7 | 0 |
| Boscalid | 90.3 | 85.8 | 61.5 | 41.0 | 4.6 | 0 |
| BIX + PTZ | 96.7 | 96.6 | 96.2 | 94.2 | 43.0 | 9.0 |
| SPR + PTZ | 95.6 | 95.4 | 93.7 | 87.7 | 22.1 | 0 |

Der Chlorophyllgehalt behandelter und nicht-behandelter Pflanzen wurde nach der Pigment-Extraktionsmethode von Ziegler und Ehle bestimmt. Als ertragsrelevante Faktoren wurden der Kornertrag, die Tausend-Kornmasse, die Anzahl der Ähren/Parzelle und die Strohmasse erfasst.

Es zeigt sich, dass bei Verwendung mindestens eines Succinat-Dehydrogenase (SDH)-Inhibitors, z.B. von Bixafen alleine oder aber in Kombination mit weiteren fungiziden Wirkstoffen, wie insbesondere Prothioconazole, der Chlorophyllgehalt insgesamt höher ist und der Abbau an Chlorophyll langsamer erfolgt; das Chlorophyll in der Pflanze also stabilisiert wird. Dieses zeigt ein Vergleich des Chlorophyllgehalts bei unterschiedlichen Entwicklungsstadien (vgl. Tabelle 4) der Pflanze.

**Tabelle 4: Einfluss von Fungizidbehandlungen auf den Chlorophyllgehalt von Weizenblättern zu den Entwicklungsstadien BBCH 75 (Milchtreife) und BBCH 85 (Teigreife)**

| Behandlung | Chlorophyllgehalt [µg g⁻¹] | | | | | | |
|---|---|---|---|---|---|---|---|
| | BBCH 75 | | | BBCH 85 | | | |
| | F | F-1 | F-2 | F | | F-1 | F-2 |
| Unbehandelt | 1328 | 990 | 555 | 121 | | 119 | 220 |
| Bixafen (BIX) | 1763 | 1693 | 1243 | 738 | | 631 | 404 |
| Fluoxastrobin | 1924 | 1671 | 1126 | 630 | | 534 | 415 |
| Prothioconazole (PTZ) | 1740 | 1637 | 1207 | | 211 | 163 | 116 |
| Spiroxamine (SPR) | 1471 | 1245 | 707 | | 114 | 119 | 147 |
| Boscalid | 1597 | 1505 | 826 | | 188 | 160 | 110 |
| BIX + PTZ | 1915 | 1657 | 1180 | | 1200 | 716 | 538 |
| SPR + PTZ | 1794 | 1373 | 1012 | | 149 | 344 | 189 |

Auch die einzelnen Ertragskomponenten von Weizen können durch die erfindungsgemäße Verwendung mindestens eines Succinat-Dehydrogenase (SDH)-Inhibitors ggf. in Kombination mit einem weiteren Fungizid verbessert werden (vgl. Tabelle 5). Dieses betrifft den Ertrag, die Tausend-Kornmasse, und die Anzahl an Ähren pro m².

**Tabelle 5: Einfluss von Fungizidbehandlungen auf die Ertragskomponenten von Weizen**

| Behandlung | Ertrag | TKM | Ähren / m² | Stroh | Harvest- |
|---|---|---|---|---|---|
| | [t ha⁻¹] | [g] | | [g m⁻²] | Index |
| Unbehandelt | 7.3 | 40.3 | 392 | 467 | 60.3 |
| Bixafen (BIX) | 8.5 | 47.7 | 417 | 590 | 58.5 |
| Fluoxastrobin | 8.2 | 45.8 | 409 | 581 | 58.1 |
| Prothioconazole (PTZ) | 8.1 | 46.3 | 397 | 533 | 59.3 |
| Spiroxamine (SPR) | 7.7 | 44.2 | 409 | 514 | 59.3 |
| Boscalid | 7.8 | 44.6 | 444 | 514 | 58.6 |
| BIX + PTZ | 8.7 | 49.2 | 391 | 600 | 59.6 |
| SPR + PTZ | 8.3 | 45.9 | 395 | 562 | 58.8 |

### Beispiel 2:

In einem Gewächshaus-Versuch wurde unter kontrollierten Bedingungen die Wirkung von Bixafen auf die Physiologie, Morphologie und die abiotische Stresstoleranz von befallsfreien Weizenpflanzen der Sorte Passat untersucht.

Die Weizenpflanzen wurden in 10 Liter - Containern über einen Zeitraum von 4 Monaten kultiviert. Als Substrat wurde Einheitserde Typ ED 73 (Fröndenberg, Deutschland) + C-Horizont + Sand (4:2:1) verwendet. Die Nährstoff-Versorgung der Pflanzen erfolgte durch Gabe von einer 0,2%-igen Flory 2 Flüssigdüngerlösung (Fa. Euflor, München) einmal alle zwei Wochen. Die Pflanzen wurden dem Bedarf entsprechend mit Wasser versorgt. Je Versuchsglied wurden 10 Wiederholungen angelegt.

Zur Vorbeugung des Befalls mit Echtem Mehltau wurde einmalig Proquinazid (Talius^{Ⓡ}) appliziert. Das Auftreten von Aphiden und Spinnmilden wurde durch Behandlungen mit Karate^{Ⓡ}, Bulldock^{Ⓡ} und Sumicidin^{®} vermieden.

Die zu prüfenden Produkte wurden in Form von sequentiellen Spritzfolgen (BBCH 39 und 59) auf die Pflanzen appliziert. Das Spritzvolumen betrug 3001 1 Wasser je Hektar.

| Wirkstoff(e) | Formulierung | Wirkstoffgehalt [g a.i./l] | Aufwandmenge [l/ha] | Applizierte Menge [g/ha] |
|---|---|---|---|---|
| Bixafen | EC | 125 | 1 | 125 |
| Fluoxastrobin | EC | 100 | 2 | 200 |
| Prothioconazole | EC | 250 | 0,8 | 200 |
| Spiroxamine | EC | 500 | 0,75 | 375 |

Anschließend wurden nicht-invasive und invasive Methoden zur Erfassung der Pflanzenentwicklung und -physiologie angewendet. Des Weiteren wurden morphologische und ertragsrelevante Parameter erfasst.

### Ergebnisse des Beispiels 2:

Die Dauer der Grünfärbung der Blattfläche wurde anhand von regelmäßigen visuellen Bonituren des Anteils der grünen Blattfläche erfasst.

Die Versuche zeigen, dass der Succinat-Dehydrogenase (SDH)-Inhibitor Bixafen einen ausgeprägten Effekt auf die Dauer der grünen Blattfläche der Weizenpflanze aufweist.

**Tabelle 6: Einfluss von Fungizidbehandlungen auf die grüne Blattfläche des Fahnenblattes (F; % Blattfläche)**

| Behandlung | Tage nach der zweiten Fungizidapplikation | | | | | | | |
|---|---|---|---|---|---|---|---|---|
| | 68 | 75 | 82 | 89 | 96 | 103 | 110 | 117 |
| Unbehandelt | 100 | 100 | 100 | 93 | 78 | 53 | 21 | 2 |
| Bixafen | 100 | 100 | 100 | 95 | 88 | 65 | 38 | 15 |
| Fluoxastrobin | 100 | 100 | 100 | 95 | 85 | 60 | 37 | 12 |
| Prothioconazole | 100 | 100 | 100 | 95 | 85 | 62 | 38 | 15 |
| Spiroxamine | 100 | 100 | 100 | 92 | 80 | 55 | 23 | 3 |
| | | | | | | | | |

**Tabelle 7: Einfluss von Fungizidbehandlungen auf die grüne Blattfläche des zweitobersten Blattes (F-1; % Blattfläche)**

| Behandlung | Tage nach der zweiten Fungizidapplikation | | | | | | | |
|---|---|---|---|---|---|---|---|---|
| | 68 | 75 | 82 | 89 | 96 | 103 | 110 | 117 |
| Unbehandelt | 100 | 100 | 92 | 75 | 46 | 22 | 5 | 0 |
| Bixafen (BIX) | 100 | 100 | 95 | 85 | 57 | 33 | 20 | 5 |
| Fluoxastrobin | 100 | 100 | 95 | 84 | 56 | 30 | 18 | 6 |
| Prothioconazole | 100 | 100 | 95 | 83 | 57 | 30 | 19 | 5 |
| Spiroxamine | 100 | 100 | 90 | 77 | 50 | 23 | 6 | 0 |

**Tabelle 8: Einfluss von Fungizidbehandlungen auf die grüne Blattfläche des drittobersten Blattes (F-2; % Blattfläche)**

| Behandlung | Tage nach der zweiten Fungizidapplikation | | | | | | | |
|---|---|---|---|---|---|---|---|---|
| | 68 | 75 | 82 | 89 | 96 | 103 | 110 | 117 |
| Unbehandelt | 100 | 95 | 70 | 40 | 19 | 4 | 0 | 0 |
| Bixafen | 100 | 95 | 80 | 52 | 29 | 15 | 6 | 0 |
| Fluoxastrobin | 100 | 95 | 82 | 54 | 29 | 18 | 7 | 0 |
| Prothioconazole | 100 | 95 | 83 | 53 | 30 | 17 | 8 | 0 |
| Spiroxamine | 100 | 95 | 73 | 45 | 19 | 7 | 0 | 0 |

Als ertragsrelevante Faktoren wurden ferner der Kornertrag, die Tausend-Kornmasse, die Anzahl der Ähren/Container und die Kornzahl/Ähre erfasst.

Es ist festzustellen, dass der Succinat-Dehydrogenase (SDH)-Inhibitor Bixafen zu einem höheren Ertrag, zu einer höheren Kornzahl/Ähre, zu einer höheren Tausend-Kornmasse und zu einem niedrigeren Strohanteil führt als die übrigen Vergleichsfungizide. Bixafen zeigt einen hohen Ernteertrag, ausgedrückt in dem Verhältnis von geernteten zu nicht nutzbaren Teilen einer Pflanze (fachsprachlich *Harvest-Index* genannt).

**Tabelle 9: Einfluss von Fungizidbehandlungen auf die Ertragskomponenten von Weizen**

| Behandlung | Ertrag [g / Topf] | Ähren / Topf | Körner / Ähre | TKM [g] | Stroh [g / Topf] | Harvest-Index [%] |
|---|---|---|---|---|---|---|
| | | | | | | |
| Unbehandelt | 29.6 | 39.0 | 22.7 | 33.5 | 64.6 | 31.4 |
| Bixafen | 37.5 | 40.0 | 25.1 | 37.5 | 88.5 | 29.8 |
| Fluoxastrobin | 30.5 | 41.0 | 21.9 | 34.3 | 74.5 | 29.0 |
| Prothioconazole | 32.1 | 43.1 | 22.2 | 33.5 | 85.4 | 27.3 |
| Spiroxamine | 33.4 | 40.9 | 23.2 | 35.5 | 58.6 | 36.3 |

Als morphologische Parameter wurde ferner die Länge und Breite, also die Größe des Fahnenblattes gemessen. Diese ist bei dem Succinat-Dehydrogenase (SDH)-Inhibitor Bixafen am größten im Vergleich zu den übrigen Vergleichsfungiziden.

**Tabelle 10: Einfluss von Fungizidbehandlungen auf die Größe des Fahnenblattes von Weizen zu BBCH 83-85**

| Behandlung | Länge [cm] | Breite [cm] | Fläche [cm²]¹ | Fläche [rel.] |
|---|---|---|---|---|
| Unbehandelt | 25.1 | 1.3 | 21.86 | 100 |
| Bixafen | 28.1 | 1.7 | 32.01 | 146 |
| Fluoxastrobin | 25.6 | 1.4 | 24.01 | 110 |
| Prothioconazole | 26.7 | 1.3 | 23.26 | 106 |
| Spiroxamine | 26.1 | 1.2 | 20.98 | 96 |

| | | | | |
|---|---|---|---|---|
| ¹ berechnet nach der Formel F = 0.67 x Länge x Breite | | | | |

Ferner wurde der Einfluss von Fungizidbehandlungen auf den Zeitpunkt des Ährenschiebens von Weizen beurteilt. Es zeigte sich, dass bei Verwendung von Bixafen ein einheitlicheres Ährenschieben erfolgt. Da die im Fokus stehenden Pflanzen häufig während dem Zeitraum des Ährenschiebens von Fusarium-Pathogenen befallen werden, ermöglicht ein einheitlicheres Ährenschieben zu diesem Zeitpunkt eine gezielte Kontrolle des Fusarium-Pathogens.

**Tabelle 11: Einfluss von Fungizidbehandlungen auf den Zeitpunkt des Ährenschiebens von Weizen (nach 40 Tagen waren noch keine Ähren vorhanden, nach 90 Tagen waren in allen Behandlungen alle Ähren geschoben).**

| Behandlung | Tage nach Aussaat [d] | | | | | | | | |
|---|---|---|---|---|---|---|---|---|---|
| | 45 | 50 | 55 | 60 | 65 | 70 | 75 | 80 | 85 |
| Unbehandelt | 17.9 | 45.1 | 48.9 | 54.1 | 64.1 | 76.4 | 83.5 | 96.1 | 100 |
| Bixafen | 1.8 | 15.5 | 42.2 | 57.0 | 78.0 | 88.7 | 93.5 | 96.7 | 98.5 |
| Fluoxastrobin | 11.4 | 33.1 | 43.8 | 49.9 | 61.1 | 76.4 | 87.8 | 93.1 | 97.1 |
| Prothioconazole | 6.9 | 29.0 | 42.6 | 48.2 | 64.1 | 77.9 | 87.1 | 94.9 | 100 |
| Spiroxamine | 10.8 | 34.1 | 46.4 | 57.5 | 75.5 | 83.4 | 91.1 | 99.1 | 100 |

Die in der nachfolgenden Tabellen 12 dargestellten Ergebnisse belegen, dass mit mindestens einem Succinat-Dehydrogenase (SDH)-Inhibitor behandelte Pflanzen eine verbesserte Transpirationsrate und damit eine verbesserte Verdunstungskühlung aufweisen.

**Tabelle 12 Einfluss von Fungizidbehandlungen auf die Temperatur der Ähren bzw. Blätter von Weizen (als Maß für die Transpirationsaktivität) zu den vier Entwicklungsstadien BBCH 75, 80, 85 und 90.**

| Behandlung | Temperatur [°C] | | | | | | | |
|---|---|---|---|---|---|---|---|---|
| | BBCH 75 | | BBCH 80 | | BBCH 85 | | BBCH 90 | |
| | Ähre | Blatt | Ähre | Blatt | Ähre | Blatt | Ähre | Blatt |
| Unbehandelt | 23.7 | 22.5 | 20.4 | 18.1 | 25.3 | 24.4 | 24.3 | 23.4 |
| Bixafen | 22.3 | 22.1 | 18.2 | 16.4 | 24.5 | 23.3 | 24.1 | 22.3 |
| Fluoxastrobin | 23.1 | 22.3 | 18.9 | 16.5 | 24.8 | 23.4 | 23.9 | 22.7 |
| Prothioconazole | 23.1 | 22.4 | 19.5 | 16.6 | 24.8 | 23.7 | 24.2 | 23.1 |
| Spiroxamine | 23.2 | 22.4 | 20.2 | 16.4 | 25.1 | 23.7 | 24.2 | 23.2 |

Wie die nachfolgende Tabelle 13 zeigt, kann unter Verwendung von einem Succinat-Dehydrogenase (SDH)-Inhibitor eine erhöhte Photosyntheserate in der Pflanze der Familie der Süßgräser erreicht werden.

**Tabelle 13 Einfluss von Fungizidbehandlungen auf die Gaswechselaktivität von Weizenähren zu Entwicklungsstadium BBCH 75.**

| Behandlung | Photosynthese | Respiration |
|---|---|---|
| | [CO₂ je Ähre] | [CO₂ je Ähre] |
| Unbehandelt | -0.98 a | 0.80 a |
| Bixafen | -5.94 b | 6.12 c |
| Fluoxastrobin | -2.44 a | 2.96 b |
| Prothioconazole | -1.86 a | 2.12 ab |
| Spiroxamine | -2.36 a | 2.82 b |

## Patentansprüche

1. Verwendung von mindestens einem Succinat-Dehydrogenase (SDH)-Inhibitor zur Vergrößerung der Biomasse des Fahnenblatts, des Blatts F-1 und/oder des Blatts F-2 der Pflanze von Pflanzenarten der Familie der Süßgräser (*Poaceae*)*.*

2. Verwendung nach Anspruch 1 in einem Entwicklungsstadium BBCH 19 bis 70 der Pflanzenart.

3. Verwendung nach Anspruch 1 oder 2, wobei der mindestens eine Succinat-Dehydrogenase (SDH)-Inhibitor zu mindestens zwei Zeitpunkten der Entwicklung der Pflanzenarten appliziert wird, wobei
- die erste Applikation zu einem Zeitpunkt des Entwicklungsstadium BBCH 19 bis 70 der Pflanzenart erfolgt, und
- die zweite Applikation zu einem Zeitpunkt erfolgt, zu welchem zumindest das Blatt F-2 entwickelt ist.

4. Verwendung nach einem der Ansprüche 1 bis 3 zur Vergrößerung der Biomasse der Pflanze.

5. Verwendung nach Anspruch 3 oder 4 zur Vergrößerung der Biomasse von Ähren, Getreidekörnern und/oder Getreidekörnern je Ähre.

6. Verwendung nach einem der Ansprüche 1 bis 5 zur gleichzeitigen Verbesserung des physiologischen Zustands der Pflanze.

7. Verwendung nach Anspruch 6 zur Verlängerung der grünen Blattflächendauer der Pflanze.

8. Verwendung nach Anspruch 6 oder 7 zur Erzielung einer erhöhten Photosyntheserate in der Pflanze.

9. Verwendung nach einem der Ansprüche 6 bis 8 zur Erzielung eines erhöhten Chlorophyllgehalts und/oder eines stabilisierten Chlorophyllgehalts in der Pflanze.

10. Verwendung nach einem der Ansprüche 6 bis 9 zur Erzielung einer verspäteten Seneszenz einer Pflanze.

11. Verwendung nach einem der Ansprüche 6 bis 10 zur Verbesserung der Widerstandsfähigkeit und Toleranz von Pflanzen gegenüber abiotischen Stressfaktoren.

12. Verwendung nach einem der Ansprüche 1 bis 11, wobei der Succinat-Dehydrogenase (SDH)-Inhibitor ausgewählt ist aus der Gruppe, bestehend aus Fluopyram, Penflufen, Bixafen, Sedaxane, Isopyrazam, Penthiopyrad, Boscalid Fluxapyraxad und N-[1-(2,4-Dichlorphenyl)-1-methoxypropan-2-yl]-3-(difluormethyl)-1-methyl-1H-pyrazol-4-carboxamid.

13. Verwendung nach einem der Ansprüche 1 bis 12, **dadurch gekennzeichnet, dass** der Succinat-Dehydrogenase (SDH)-Inhibitor mit einer Dosierung zwischen 0,01 und 3 kg/ha appliziert wird.

14. Verwendung nach einem der Ansprüche 1 bis 13, **dadurch gekennzeichnet, dass** geeignete Zielkulturen ausgewählt werden aus der Gruppe der Süßgräser, bestehend aus Weizen, Roggen, Gerste, Hafer, Hirse, Mais, Reis, Triticale, Bambus und Zuckerrohr.
